Europäisches Patentamt

European Patent Office

Office européen des brevets

(19)

(11) Publication number: 0 300 550
A2

(12) EUROPEAN PATENT APPLICATION

(21) Application number: 88201458.2

(51) Int. Cl.4: B60R 16/02 , B60J 1/17

(22) Date of filing: 09.07.88

(30) Priority: 21.07.87 IT 6762887

(43) Date of publication of application:
25.01.89 Bulletin 89/04

(84) Designated Contracting States:
AT BE CH DE ES FR GB GR LI LU NL SE

(71) Applicant: Bonetto, Claudio
Via Exilles 51
I-10146 Torino(IT)

Applicant: Bonetto, Luigi
Corso Agnelli 102
I-10137 Torino(IT)

Applicant: Loria, Ugo
Via Fagnano 13
I-10144 Torino(IT)

(72) Inventor: Bonetto, Claudio
Via Exilles 51
I-10146 Torino(IT)
Inventor: Bonetto, Luigi
Corso Agnelli 102
I-10137 Torino(IT)
Inventor: Loria, Ugo
Via Fagnano 13
I-10144 Torino(IT)

(74) Representative: Robba, Eugenio et al
Studio "INTERPATENT" via Caboto 35
I-10129 Turin(IT)

(54) Safety device for car power windows.

(57) On the edge of the glass receiving frame of the car there is provided a hollow (at 3) weather strip (1) within which two parallel conductors (5) extend spaced apart and are connected to an electric or electronic control unit (7) which is connected to the motor (9) of the power windows and to an outer control switch (11). In case of abnormal working conditions, a squashing of the cavity or channel (3) of the weather strip (1) causes a contact of the conductors (5) closing the circuit connected to a switch reversing the motion of the motor (9) in the control unit (7).

A temporary storage causes the window to continue the movement downwardly in spite of other commands sent to the device control unit.

FIG. 1

## "SAFETY DEVICE FOR CAR POWER WINDOWS"

The present invention concerns a safety device in a power window assembly for motor cars.

It is well known that the rapid spread of automatisms in the car industry has led to the installment of power windows in many type of motor cars.

It is also known that such automatic devices generally provide for an electric motor which is properly driven to actuate the power window assembly to raise and lower the car windows.

It is to be understood that such electric motors for power window assemblies are dimensioned considering a number of different factors besides the width and the weight of the windows, which can adversely affect the smooth window sliding: e.g. the wear conditions, the dirt, the wet or dry state of the windows, dried or new seals or guides, and so on.

The above leads to some oversize of the dedicated electric motor so that the power of such motor is not just that required to raise the car windows, but it is considerably larger.

Therefore, in case an obstacle interferes with the raising of a window, such as a hand or other, such obstacle will be forcibly pressed by the rising window before the thermal switch intervenes to stop the motor.

Some measures have been taken to overcome such inconvenience: reference is made to sensitive switches intervening as soon as the motor begins to detect a certain stress, which works according to the principle of the thermal switch, or friction devices which although without stopping the motor, make it slip thus halting the window driven by it.

Nevertheless such safety devices only stop the rising window, which is not enough in some instances (e.g. in case when a child's limb put out is accidentally trapped).

It is an object of the present invention to eliminate said shortcomings, which are typical of the known safety devices, by providing a safety device which not only stops the window motor, but additionally reverses its movement, thereby lowering the window until the end of the window travel.

Another object of the present invention is to provide a safety device intervening at a pressure level which is quite lower than the intervention pressure of the above mentioned devices, and which is therefore sensible to a light contact such as the one with a child's limb.

The squash preventing device according to the present invention substantially comprises a hollow rubber weather strip extending along the contour of the car glass receiving frame, within cavity or channel which two electrical conductors extend parallel to each other and spaced apart when th channel is not squashed, and are connected to an electric or electronic unit reversing the motor rotation, connected with both the windows electric motor and the outer control switch.

The working of the device is the following. In case the hollow weather strip of the glass receiving frame is squashed due to an interposed obstacle such as a passenger's hand or the like, the two parallel conductors are brought in contact, thereby closing a circuit and actuating the reverse switch within the control unit, which acts on the windows motor to reverse the direction of rotation.

After the intervention, the car window will continue the downward movement until the end of allowed travel.

According to an embodiment, the safety device substantially comprises a threadlike member or tension wire extending within the hollow weather strip of the glass receiving frame, properly tensioned so that in case of strip compression or squashing, said wire is transversely moved, which causes the closure of a contact and therefore the actuation of the control unit reversing the windows motor.

According to another embodiment, the hollow weather strip of the glass receiving frame is filled with a fluid, such as air, in contact with a sensor connected in turn to the reversing control unit, the squashing of the strip causing a displacement of the sensor and therefore actuating the reversing switch of the control unit acting on the windows motor.

The control unit supervising the working of the device, substantially comprise:

- a sensor assembly adapted to detect an even slight obstacle interposed between the glass edge and the edge of the interior compartment;

- an adapter circuit to convert and adapt a pulse received from the above mentioned sensor;

- a temporary storage allowing for the device motor to continue driving the window downward until the end of the travel in spite of other commands received by said motor;

- a circuit controlling the rotation reversal of the power windows device.

The electric control unit proposed as an alternative to the electronic control unit for the device substantially comprises:

- a normally open sensor, adapted to detect an even slight obstacle interposed between the glass edge and the edge of the interior compartment; and

- a reversal arrangement connected through relays with the sensor and the motor.

Additional features and advantages will be evident from the following detailed description with reference to some preferred embodiments of the invention, together with the attached drawings in which:

- Fig. 1 schematically illustrates an embodiment of the invention in which two parallel electric conductors are provided for in the channel of the weather strip;

- Fig. 2 is a part section showing the weather strip with the channel, fitted to the glass receiving frame of a motor car;

- Fig. 3 shows a modification of Fig. 2;

- Fig. 4 schematically shows a modification of the embodiment of Fig. 1 in which a tension wire is provided extending along the strip channel;

Fig. 5 is a schematic part section illustrating the construction of the tension wire of Fig. 4;

Fig. 6 schematically illustrates another embodiment of the device in which the hollow weather strip of the glass receiving frame is filled with a fluid, such as air;

Fig. 7 is a part section along the weather strip of such embodiment;

- Fig. 8 shows another embodiment of the weather strip of Fig. 7;

- Fig. 9 shows the circuit of the electronic control unit; and

- Fig. 10 shows the circuit of the electric control unit for the device.

As clearly shown in the Figures, the device of the invention substantially comprises a weather strip 1 to be fitted within the glass receiving frame of the car, which is made of rubber, such as a long life rubber, provided with a cavity or channel 3 extending along the whole lenght of the strip, in which two electric conductors 5 are properly positioned, which are connected to a control unit 7 which in turn is connected both with the windows motor 9 and with an outer control or command switch 11.

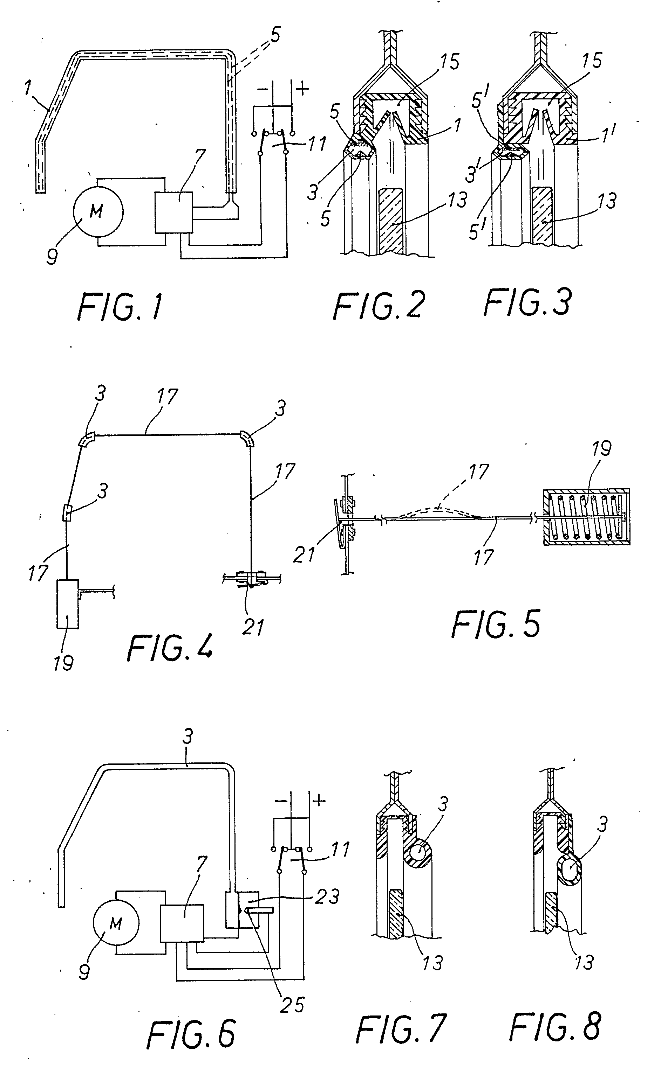

Fig. 2 clearly shows the two spaced apart conductors 5, positioned within the channel 3 of the strip 1, as well as the upper edge of the window glass 13 which is going to close upwardly into the seat 15 provided in the glass receiving frame as an end of travel for the glass.

In Fig. 3 there is shown another embodiment of the weather strip with the channel housing the conductors applied outside.

In view of the substantial equivalence of the arrangements, the weather strip shown in Fig. 3 is marked with 1′, the channel with 3′, and the two conductors within said channel 3′ with 5′.

Fig.s 4 and 5 schematically show another embodiment of the device, in which embodiment a tension wire 17 extends along the channel 3 of the weather strip 1, the wire being kept under tension in the channel and with one of its ends connected with a spring 19, and with the other end connected with a contact 21 easily closed when the deflection of wire 17 due to a deformation of the channel 3 will reduce its lenght, even if slightly.

The remaining portion is substantially identical with the portion just described of the embodiment providing for two parallel conductors (Fig.s 1-3).

In Fig.s 7 and 8 there is schematically shown another embodiment of the invention, in which embodiment the channel 3 of the weather strip 1 is filled with a fluid, e.g. air.

In such embodiment the channel 3 has to be coupled with a chamber 23 housing a sensor 25 or contact member adapted to be displaced (closed) in respect of a rest position (open), by the slight pressure of the fluid displacement in such chamber due to the squashing of the channel 3 of weather strip 1.

For the remaining all is like what has already been described.

In the control unit 7, the displacement of such membrane sensor 25 will generate a pulse which after being properly adapted and stored, will drive the windows motor 9 downwardly until the end of travel.

Thanks to the transitory storage, such movement cannot be stopped, as in other known devices, by other commands sent from outside to the control unit or to the motor.

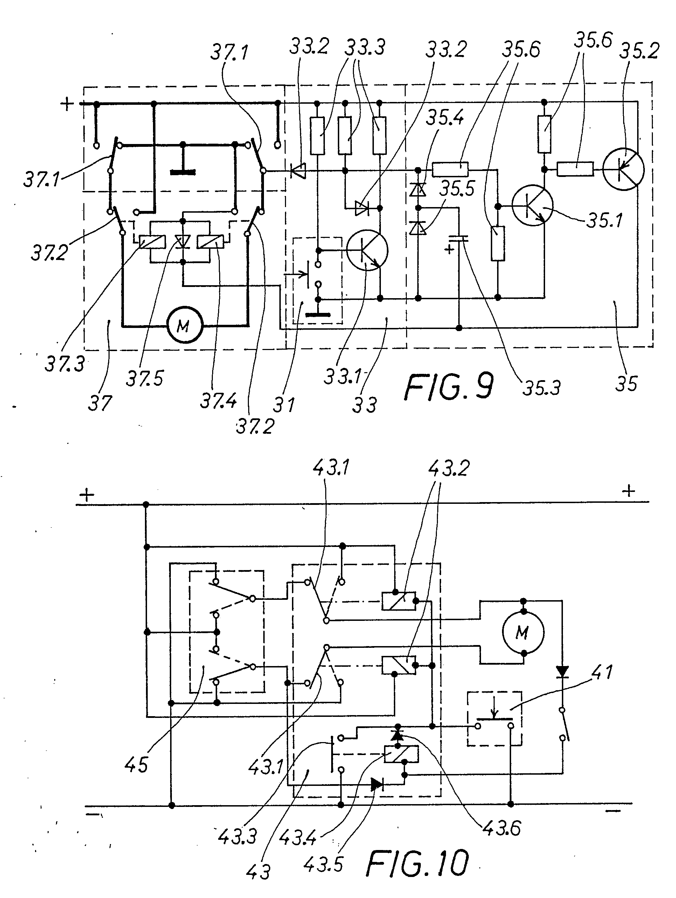

Fig. 9 shows the circuit of the electronic control unit supervising the working of the device.

Substantially it comprises a sensor 31 actuating a temporary storage by means of an adapter circuit 33, which storage in turn actuates the circuit 37 commanding the reversal of motor M.

Since the circuit is not particularly complicated, the same is not described in detail: it is only pointed out that the sensor 31 is a simple contact member, the adapter circuit 33 includes a transistor 33.1, a diode 33.2 and resistors 33.3. The temporary storage 35 comprises two transistors 35.1 and 35.2, an electrolytic capacitor 35.3, two diodes 35.4 and 35.5, and properly connected resistors 35.6.

The circuit 37 commanding the reversal of motor M comprises push button switches 37.1, remotely controlled switches 37.2, and two relays 37.3 and 37.4, properly filtered by a diode 37.5.

The electric control unit is provided with a slightly different electric circuit which is shown in Fig. 10.

It can be seen that such circuit substantially comprises a sensor 41, a reversal arrangement 43 for the direction of rotation of motor M, and control push buttons 45.

More particularly, the circuit 43 reversing the direction of rotation of motor M comprises two switches 43.1 controlled by relays 43.2 connected with another switch 43.3 actuated by a relay 43.4, as well as feeding and safety diodes 43.5 and 43.6.

## Claims

1. A safety device for car power windows characterized in that it substantially comprises a hollow (at 3) rubber weather strip (1) extending along the contour of the car glass receiving frame, within which cavity or channel (3) two electric conductors (5) extend parallel to each other and spaced apart when the channel is not squashed, and are connected to an electric or electronic unit (7) reversing the motor rotation, connected with both the windows electric motor (9) and the outer control switch (11).

2. A safety device for car power windows as claimed in claim 1, characterized in that it substantially comprises a threadlike member (17) or tension wire extending within (3) the hollow weather strip (1) of the glass receiving frame, properly tensioned so that in case of strip compression or squashing, said wire (17) is transversely moved, which causes the closure of a contact (21) and therefore the actuation of the control unit reversing the windows motor (9).

3. A safety device for car power windows as claimed in claim 1 or 2, characterized in that the hollow (at 3) weather strip (1) of the glass receiving frame is filled with a fluid, such as air, in contact with a sensor (25) connected in turn to the reversing control unit(7), the squashing of the strip (3) causing a displacement of the sensor (25) and therefore actuating the reversing switch of the control unit (7) acting on the windows motor (9).

4. A safety device for car power windows according to the preceding claims characterized in that the control unit supervising the working of the device, substantially comprises:

- a sensor assembly (31) adapted to detect an even slight obstacle interposed between the glass edge and the edge of the interior compartment;

- an adapter circuit (33) to convert and adapt a pulse received from the above mentioned sensor (31);

- a temporary storage (35) allowing for the device motor (M) to continue driving the window downward until the end of the travel in spite of other commands received by said motor (M);

- a circuit (37) controlling the rotation reversal of the motor (M) of the power windows device.

5. A safety device for car power windows according to the preceding claims, characterized in that the electric control unit proposed as an alternative to the electronic control unit for the device substantially comprises:

- a normally open sensor (41), adapted to detect an even slight obstacle interposed between the glass edge and the edge of the interior compartment; and

- a reversal arrangement (43) connected through relays with the sensor (41) and the motor (M).

FIG.1    FIG.2    FIG.3

FIG.4    FIG.5

FIG.6    FIG.7    FIG.8

FIG. 9

FIG. 10